Europäisches Patentamt

**European Patent Office**

Office européen des brevets

(19)

(11) Publication number: **0 148 948**

**A1**

(12) **EUROPEAN PATENT APPLICATION**

published in accordance with Art. 158(3) EPC

(21) Application number: **84900888.3**

(22) Date of filing: **27.02.84**

Data of the international application taken as a basis:

(86) International application number:
**PCT/JP84/00069**

(87) International publication number:
**WO84/03960 (11.10.84 84/24)**

(51) Int. Cl.⁴: **G 05 B 19/405**
**G 06 F 3/02**

(30) Priority: **31.03.83 JP 53862/83**

(43) Date of publication of application:
**24.07.85 Bulletin 85/30**

(84) Designated Contracting States:
**DE FR GB**

(71) Applicant: **FANUC LTD**
**3580, Shibokusa Aza-Komanba Oshino-mura**
**Minamitsuru-gun Yamanashi 401-05(JP)**

(72) Inventor: **KIYA, Nobuyuki 13-106, Yokokawacho**
**zyutaku**
**108, Yokokawacho Hachiouji-shi**
**Tokyo 193(JP)**

(72) Inventor: **MURAKAMI, Kunihiko 1008, Hirayamadai**
**zyutaku**
**7-8, Asahigaoka 6-chome**
**Hino-shi Tokyo 191(JP)**

(74) Representative: **Billington, Lawrence Emlyn et al,**
**HASELTINE LAKE & CO Hazlitt House 28 Southampton**
**Buildings Chancery Lane**
**London WC2A 1AT(GB)**

(54) **METHOD OF SETTING DATE IN NUMERICAL CONTROL APPARATUS.**

(57) A method of setting data in a numerical control apparatus enables efficient input by displaying the types and contents of preparatory function codes and a standard format for each preparatory function code. When a preparatory function code menu request signal is input when in a program-editing mode (3), the types and contents of preparatory function codes are displayed on a CRT screen (4). When a selected preparatory function code is then input (5), the standard format of that selected code is displayed (7). After data is input into each of parameters in the standard format (12) and a one-block end signal is input (13), all the data is stored in the numerical control apparatus.

./...

EP 0 148 948 A1

FIG. 5

0148948

S P E C I F I C A T I O N

Technical Field

The present invention relates to a method of presetting instruction data representing preset functions in a numerical control (NC) machine such as an NC machine tool.

Background Art

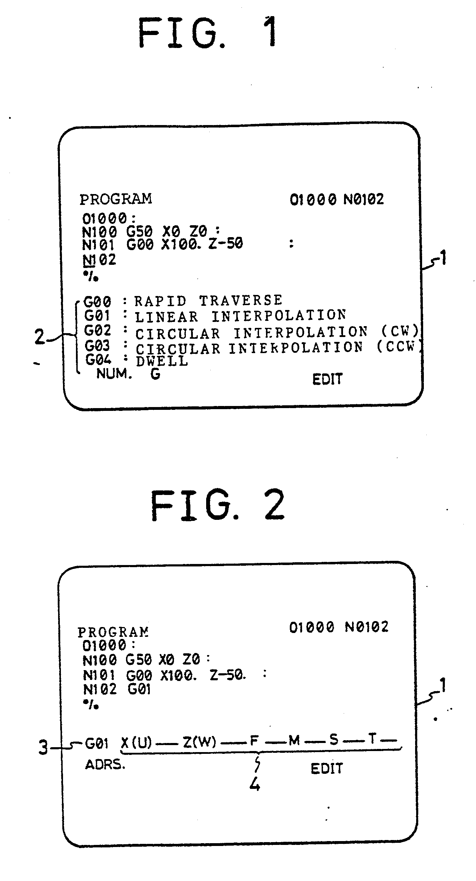

There are various types of preset function codes representing NC control functions. The data formats vary in accordance with the respective preset function codes. Beginners must refer to a service manual to perform NC programming. In order to eliminate such an inconvenience, a conventional apparatus is proposed wherein a preset function code menu or a standard format is displayed on a CRT screen in a display unit so as to simplify NC programming. For example, when an operator enters a "G" key as a preset function code access key while the NC control apparatus is set in the programming edit mode, a G code menu is displayed at the lower portion of a CRT screen 1, as shown in Fig. 1. When the operator wishes to see a subsequent G code menu, he/she depresses a "PAGE" key. When one of G codes 2 is selected in the menu, and the selected G code 3 is typed and an input instruction key "INS" is depressed, a standard format of the selected G code 3 is displayed, as shown in Fig. 2. The respective values are entered in accordance with the standard format. For example, when G code G01 is selected, the standard format shown in Fig. 2 is displayed on the CRT screen. When the operator enters data corresponding to a parameter X of parameters 4 and depresses the "INS" key as the input instruction key, the data corresponding to the parameter X can be registered. Similar data input operations are performed for parameters Z, F and M, and the operator then enters the final data corresponding to a parameter T. When the operator then depresses an EOB (end of block) key, all data required for one block are stored in a memory. However, in this conventional programming, only part of the G code menu of the preset function codes is displayed on the screen at any one time. When the operator wishes to check all the G codes as the preset function codes, he/she must depress the "PAGE" key and must select a desired G code. In addition to this inconvenience, the data must be entered in units of parameters, resulting in a complicated key input operation. Thus, data updating cannot be freely performed.

Disclosure of Invention

It is an object of the present invention to provide a method of presetting instruction data so as to eliminate problems inherent in the above-mentioned conventional method of presetting instruction data in an NC machine and to allow a beginner to easily and effectively enter instruction data into the NC machine.

In order to achieve the above object of the present invention, there is provided a method of presetting instruction data when a numerical control machine is set in a programming edit mode, comprising the steps of: displaying all types of preset function codes and contents thereof on a screen of a CRT display unit at once when a menu request signal of the preset function codes is entered in the numerical control machine; displaying a selected standard format of a given one of the preset function codes on the CRT display unit when the given code is entered at the numerical control machine; temporarily storing parameter data in a buffer when an operator enters the parameter data for the selected standard format; and transferring the parameter data stored in the buffer to a memory of the numerical control machine when an end-of-block signal is entered.

Since the present invention employs the above method, the types of preset function codes and contents thereof are displayed as a preset function code menu on the screen of the CRT display unit at once. Therefore, the operator can easily select a desired preset function code so as to decrease the number of key input steps. In addition, the respective parameter data for the selected preset code can be temporarily stored in the buffer and are then stored in the memory of the numerical control machine when an EOB (end-of-block) key is depressed. Therefore, before the parameter data are written in the memory of the numerical control machine, they can be freely updated, thereby improving the operability.

Brief Description of Drawings

Fig. 1 shows a display state of a G code menu representing preset function codes according to a conventional data presetting method;

Fig. 2 shows a display state of a standard format of one of the G codes shown in Fig. 1;

Fig. 3 shows a display state of a G code menu representing preset function codes according to a data presetting method of the present invention;

Fig. 4 shows a display state of a standard format of one of the G codes shown in Fig. 3; and

Fig. 5 is a flow chart for explaining the operation according to an instruction data presetting method of the present invention.

Best Mode of Carrying Out the Invention

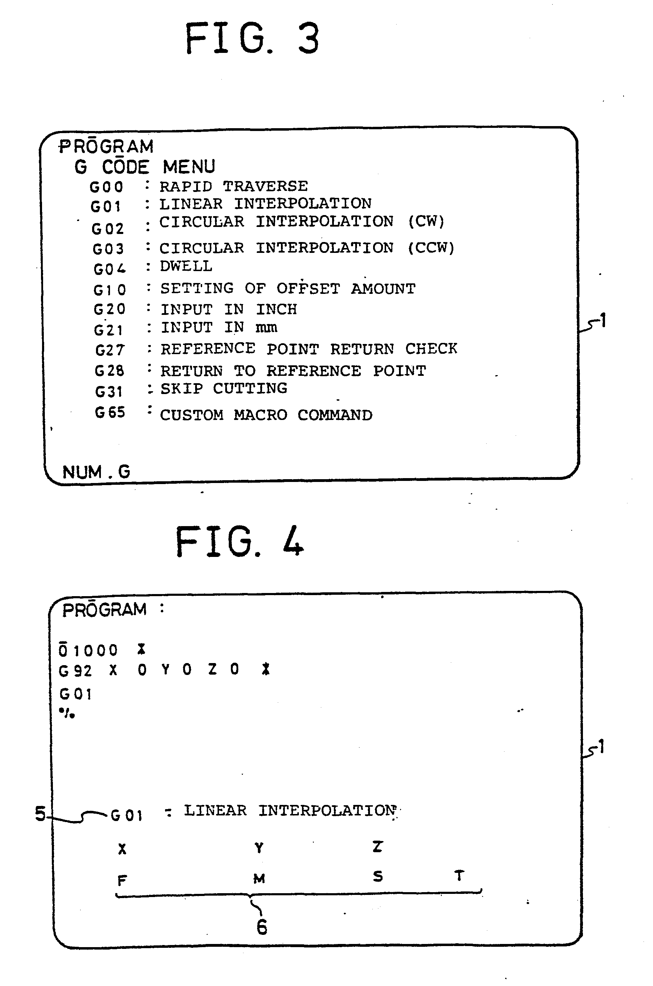

An embodiment of the present invention will be described in detail with reference to Figs. 3 to 5.

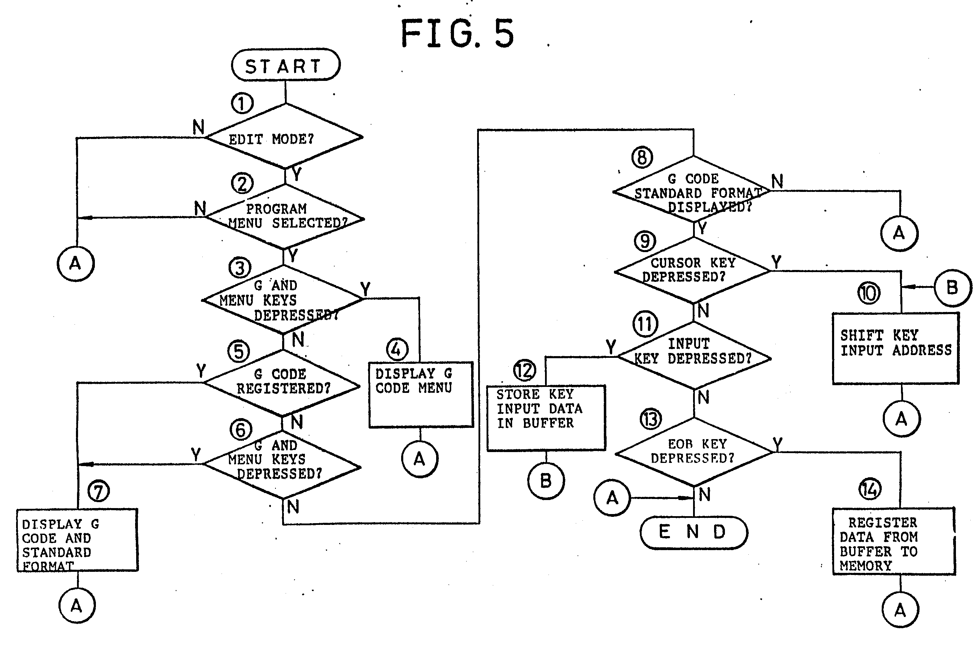

Fig. 3 shows a display state of a G code menu representing the types of G codes as preset function codes on a CRT display screen and the contents thereof. Fig. 4 shows a display state of a standard format of G code G01. Fig. 5 is a flow chart for explaining the operation according to an instruction data presetting

- 4 -

0148948

method of the present invention. The operation sequence is repeated at predetermined intervals. According to the instruction data presetting method of the present invention with reference to the flow chart of Fig. 5, when a numerical control machine is set in a programming edit mode (step ① in Fig. 5), a control section such as a CPU in the numerical control machine detects the programming edit mode. If the program menu is selected (step ② in Fig. 5), and keys (i.e., G and MENU keys) which request the display of the G code menu are depressed, the data representing all types and contents of G codes shown in Fig. 3 are read out from the memory and are displayed on the screen (step ④ in Fig. 5). The operator selects a desired G code 5 from the G codes in the G code menu displayed on the screen, as shown in Fig. 3. The control section detects in the next cycle that the desired G code is entered. The desired G code is registered (step ⑤ in Fig. 5), and the standard format of the desired G code 5 is displayed on the CRT screen. For example, the standard format of the desired G code G01 is displayed, as shown in Fig. 4. As shown in step ⑥ in Fig. 5, when the G code is entered and the MENU key is simultaneously depressed, a G code input has a priority over depression of the MENU key, thereby displaying the corresponding standard format.

When the operator depresses a cursor key (step ⑨ in Fig. 5), an address position of the key input is shifted (step ⑩ in Fig. 5) to select a desired parameter (e.g., X, Y, Z, F, M, S or T in Fig. 4). When data corresponding to the selected parameter is inputted (step ⑪ in Fig. 5), the data is stored in the buffer (steps ⑫ and ⑩ in Fig. 5). When the operator has entered all the parameter data and depresses the EOB key (step ⑬ in Fig. 5), the respective parameter data are transferred from the buffer to the memory in the numerical control machine (step ⑭ in Fig. 15).  The data preset operation is thus completed.

C L A I M S

1. A method of presetting instruction data when a numerical control machine is set in a programming edit mode, comprising the steps of: displaying all types of preset function codes and contents thereof on a screen of a CRT display unit at once when a menu request signal of the preset function codes is entered in the numerical control machine; displaying a selected standard format of a given one of the preset function codes on the CRT display unit when the given code is entered at the numerical control machine; temporarily storing parameter data in a buffer when an operator enters the parameter data for the selected standard format; and transferring the parameter data stored in the buffer to a memory of the numerical control machine when an end-of-block signal signal is entered.

2. A method according to claim 1, wherein the standard format of the given code is displayed on the CRT display unit when the given code and the menu request signal are entered.

# FIG. 1

```
PROGRAM                    O1000 N0102
O1000:
N100 G50 X0 Z0 :
N101 G00 X100. Z-50     :
N102
%

G00 : RAPID TRAVERSE
G01 : LINEAR INTERPOLATION
G02 : CIRCULAR INTERPOLATION (CW)
G03 : CIRCULAR INTERPOLATION (CCW)
G04 : DWELL
  NUM.  G                   EDIT
```

1

2

# FIG. 2

```
PROGRAM                    O1000 N0102
O1000:
N100 G50 X0 Z0 :
N101 G00 X100. Z-50.  :
N102 G01
%

G01  X(U) —— Z(W) —— F —— M —— S —— T ——
ADRS.                      EDIT
```

1

3

4

# FIG. 3

```
PROGRAM
 G CODE MENU
   G00  : RAPID TRAVERSE
   G01  : LINEAR INTERPOLATION
   G02  : CIRCULAR INTERPOLATION (CW)
   G03  : CIRCULAR INTERPOLATION (CCW)
   G04  : DWELL
   G10  : SETTING OF OFFSET AMOUNT
   G20  : INPUT IN INCH
   G21  : INPUT IN mm
   G27  : REFERENCE POINT RETURN CHECK
   G28  : RETURN TO REFERENCE POINT
   G31  : SKIP CUTTING
   G65  : CUSTOM MACRO COMMAND


 NUM.G
```

~1

# FIG. 4

```
PROGRAM :

O1000  X
G92 X  O Y O Z O  X
G01
%




    G01  : LINEAR INTERPOLATION

      X           Y           Z

      F           M           S       T
```

5

~1

6

# FIG. 5

START

① EDIT MODE? — N → Ⓐ
↓ Y

② PROGRAM MENU SELECTED? — N → Ⓐ
↓ Y

③ G AND MENU KEYS DEPRESSED? — Y → ④ DISPLAY G CODE MENU → Ⓐ
↓ N

⑤ G CODE REGISTERED? — Y →
↓ N

⑥ G AND MENU KEYS DEPRESSED? — Y →
↓ N

⑦ DISPLAY G CODE AND STANDARD FORMAT → Ⓐ

⑧ G CODE STANDARD FORMAT DISPLAYED? — N → Ⓐ
↓ Y

⑨ CURSOR KEY DEPRESSED? — Y → Ⓑ
↓ N
⑩ SHIFT KEY INPUT ADDRESS → Ⓐ

⑪ INPUT KEY DEPRESSED? — Y → ⑫ STORE KEY INPUT DATA IN BUFFER → Ⓑ
↓ N

⑬ EOB KEY DEPRESSED? — Y → ⑭ REGISTER DATA FROM BUFFER TO MEMORY → Ⓐ
↓ N
Ⓐ → END

3/3

0148948

## I. CLASSIFICATION OF SUBJECT MATTER (If several classification symbols apply, indicate all) [3]

According to International Patent Classification (IPC) or to both National Classification and IPC

Int. Cl$^3$ G05B 19/405, G06F 3/02

## II. FIELDS SEARCHED

| Minimum Documentation Searched [4] | |
|---|---|
| Classification System | Classification Symbols |
| IPC | G05B 19/403, 19/405 |

| Documentation Searched other than Minimum Documentation to the Extent that such Documents are Included in the Fields Searched [5] |
|---|
| Jitsuyo Shinan Koho     1926 - 1984<br>Kokai Jitsuyo Shinan Koho     1971 - 1984 |

## III. DOCUMENTS CONSIDERED TO BE RELEVANT [14]

| Category* | Citation of Document, [16] with indication, where appropriate, of the relevant passages [17] | Relevant to Claim No [18] |
|---|---|---|
| X | JP, A, 57-169813 (Mitsubishi Electric Corp.), 19 October 1982 (19. 10. 82), Page 3, upper right column to lower left column & WO, A, 82/03704 & EP, A1, 76328 | 1, 2 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search [2] | Date of Mailing of this International Search Report [2] |
|---|---|
| May 10, 1984    (10. 05. 84) | May 21, 1984    (21. 05. 84) |
| International Searching Authority [1]<br>Japanese Patent Office | Signature of Authorized Officer [20] |

Form PCT/ISA 210 (second sheet) (October 1981)